# EUROPEAN PATENT APPLICATION

(11) **EP 4 563 428 A1**
(43) Date of publication of application: **04.06.2025**
(21) Application number: 23213019.5
(22) Date of filing: 29.11.2023
(51) Int. Cl.: B60W 30/09, B60W 30/18, B60W 50/14, B60K 31/00, B60T 7/12

(54) **METHOD FOR OPERATING AN AUTOMATED DRIVING SYSTEM AND AUTOMATED DRIVING SYSTEM**

(71) Applicant: Robert Bosch GmbH, 70442 Stuttgart (DE)
(72) Inventor: Erostyak, Janos, Budapest (HU)

(57) **Abstract**

The invention regards a method for operating (10) an automated driving system for a vehicle (12) driving behind a bus (14), comprising the steps of receiving a bus stop action signal (16) from the bus (14) through vehicle-to-vehicle communication (18) between the bus (14) and the vehicle (12), performing a braking action (24) to decelerate the vehicle (12) behind the bus (14) depending on the bus stop action signal (16), wherein starting the braking action (24) of the vehicle (12) depends on a vehicle stop action signal (26) which is generated depending on the bus stop action signal (16) and at least one vehicle driving condition (30). The invention further regards an automated driving system for executing the method for operation (10).

## Description

The invention regards a method for operating an automated driving system according to the preamble of claim 1.

### Prior Art

In JP 2014 067 125 A is disclosed a vehicle-to-vehicle communication from a bus to a vehicle including stop request signal information from the bus informing the vehicle driver about the stop intention of the bus. Also automatic braking of the vehicle can be controlled depending on the stop request signal.

In US 2016 082 958 A1 is disclosed a cruise control method for a vehicle which stops the vehicle depending on a stop of a school bus in front of the vehicle.

### Summary of the Invention

According to the present invention a method for operating an automated driving system including all features from claim 1 is suggested. This allows to adapt the vehicle stop action to the dynamic driving conditions of the vehicle and the bus more appropriately. The traffic safety and the vehicle driving comfort can be increased. The energy consumption of the vehicle can be reduced.

The vehicle can be a car, a truck, another bus or a motorcycle. The vehicle can be an electric powered vehicle.

The bus is a scheduled bus, a travel bus and/or a school bus.

The vehicle driving condition can be a vehicle speed, a relative speed between the vehicle and the bus and/or a vehicle acceleration, the later negative or positive.

The bus stop action signal can be generated and sent out by the bus when the bus is executing a bus stop action, especially including the situation and duration of the bus stop.

The vehicle-to-vehicle communication can be an exchange of information between vehicles through a wireless network. The vehicle-to-vehicle communication can be unidirectional, bidirectional or multidirectional. The vehicle-to-vehicle communication can use Dedicated Short-Range Communications (DSRC) or Cellular-V2X (C-V2X), which relies on cellular networks, especially 5G.

According to a specific embodiment of the invention, the braking action is started if the vehicle stop action signal is generated. The intensity of the braking action is adjusted depending on the vehicle driving condition, especially the relative speed between the bus and the vehicle and the distance between the bus and the vehicle.

According to a specific embodiment of the invention, the vehicle stop action signal is not generated as long as the vehicle is stopped. Alternatively the stop action signal is generated even when the vehicle is stopped, for example to prevent that the vehicle starts moving again and passes the bus while the bus passengers are leaving the bus.

According to a specific embodiment of the invention, the vehicle stop action signal is generated by a signal generation unit. The signal generation unit includes at least one processor to calculate the vehicle stop action signal and an output unit to output the vehicle stop action signal.

According to a specific embodiment of the invention, the signal generation unit is mounted in the vehicle. The signal generation unit can be part of another control unit of the vehicle.

According to a specific embodiment of the invention, the vehicle driving condition is a current distance between the bus and the vehicle and the signal generation unit generates the vehicle stop action signal when the signal generation unit determines that the current distance is smaller than a predefined distance threshold. This allows to adapt the vehicle stop action signal generation dynamically on the vehicle driving situation.

The predefined distance threshold can be adapted dynamically depending on the relative speed between the bus and vehicle.

The current distance can be measured by vehicle sensors, especially radar sensors, LIDAR sensors, ultrasonic sensors or cameras.

According to a specific embodiment of the invention, the vehicle driving condition is a current distance between the bus and the vehicle and the signal generation unit does not generate the vehicle stop action signal when the signal generation unit determines that the current distance is equal to or larger than a predefined distance threshold. This allows to prevent interferring the vehicle driving strategy while there is no safety risk between the bus and the vehicle. The power consumption of the vehicle can be reduced.

According to a specific embodiment of the invention, dependent or independent of the vehicle stop action signal, a warning signal in the vehicle which is directly visible by the driver is displayed if the bus stop action signal is received by the vehicle. The warning signal includes a bus symbol. The warning signal can be displayed in the cockpit of the vehicle. The warning signal can be displayed on a screen in the vehicle and/or projected on the windshield.

According to a specific embodiment of the invention, the bus stop action signal is sent out by the bus and received by the vehicle as long as the bus stop action is active. This allows to recognize the stop procedure of the bus even for a vehicle approaching the bus environment while the bus stops.

According to a specific embodiment of the invention, the bus stop action signal is generated when at least one bus passenger in the bus requests a bus stop. The bus passenger can indicate his wish for a bus stop by pressing a stop request button inside of the bus. Also the bus stop action signal is generated when an emergency braking action of the bus is done.

The invention further regards an automated driving system of a vehicle arranged to be operated by the method for operating with at least one of the above described features.

Further advantages and advantageous embodiments of the invention emerge from the description of the figures and the figures.

### Figure Description

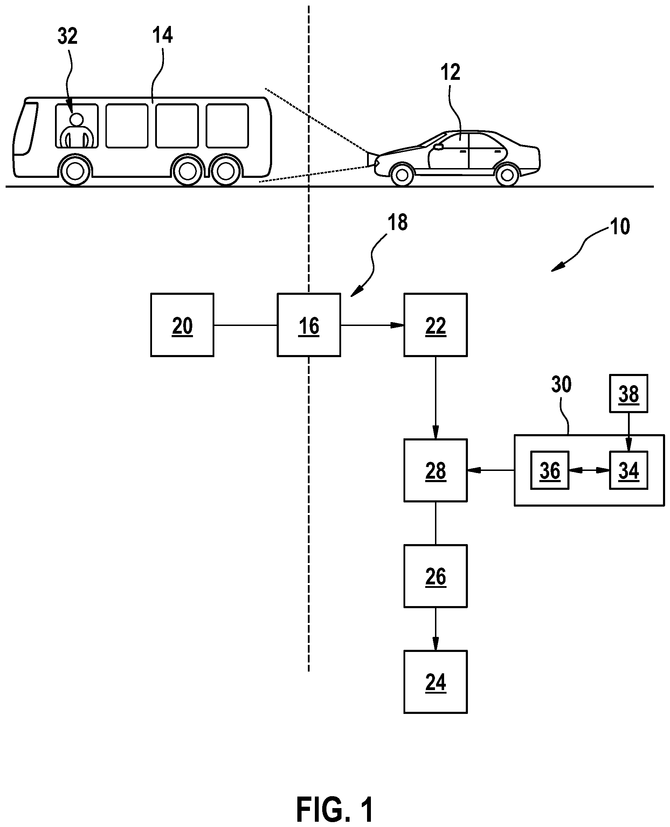

The invention is described in detail below with reference to Figure 1:

Figure 1 shows a method for operating an automated driving system in a specific embodiment of the invention. The method for operating 10 an automated driving system for a vehicle 12 is operated when the vehicle 12 is driving behind a bus 14. The method comprises the steps of receiving a bus stop action signal 16 from the bus 14 through vehicle-to-vehicle communication 18 between the bus 14 and the vehicle 12. The bus stop action signal 16 is send out by a transmitting unit 20 of the bus 14 and received by a receiving unit 22 of the vehicle 12.

A braking action 24 to decelerate the vehicle 12 behind the bus 14 depends on the bus stop action signal 16 in that starting of the braking action 24 of the vehicle 12 depends on a vehicle stop action signal 26 which is generated by a signal generation unit 28 of the vehicle 12 depending on the bus stop action signal 16 and at least one vehicle driving condition 30.

The bus stop action signal 16 is specifically generated when at least one bus passenger 32 in the bus 14 indicates his wish to exit the bus 14 on the next regular bus stop, for example by pressing a stop request button in the bus 14. The bus stop action signal 16 is especially sent out by the bus 14 and received by the vehicle 12 as long as the bus stop action is active, that means from the time pressing the stop button until the time the bus 14 moves after the stop.

The braking action 24 is started if the vehicle stop action signal 26 is generated. If the vehicle 12 is already stopped, the vehicle stop action signal 26 is not generated. But if the vehicle 12 is driving behind the bus 14 with a current vehicle speed and the bus stop action signal 16 is received, the signal generation unit 28 evaluates the vehicle driving condition 30, which especially is a current distance 34 between the vehicle 12 and the bus 14. If the signal generation unit 28 determines that the current distance 34 is smaller than a predefined distance threshold 36, the signal generation unit 28 generates the vehicle stop action signal 26 and when the signal generation unit 28 determines that the current distance 34 is larger than or equal to the distance threshold 36, the signal generation unit 28 does not generate the vehicle stop action signal 26. This allows to adapt the vehicle stop action signal 26 generation dynamically on the vehicle driving situation.

If for example the distance 34 is larger than the signal threshold 36, the vehicle stop action signal 26 is not generated because a safety distance between the bus 14 and the vehicle 12 exists. Only if the distance 34 falls below the distance threshold 36, the signal generation unit 28 generates the vehicle stop action signal 26. The predefined distance threshold 36 is especially adapted dynamically depending on the relative speed between the bus 14 and vehicle 12. The current distance 34 can be measured by vehicle sensors 38, especially radar sensors, LIDAR sensors, ultrasonic sensors or cameras.

## Claims

1. Method for operating (10) an automated driving system for a vehicle (12) driving behind a bus (14), comprising the steps of
receiving a bus stop action signal (16) from the bus (14) through vehicle-to-vehicle communication (18) between the bus (14) and the vehicle (12),
performing a braking action (24) to decelerate the vehicle (12) behind the bus (14) depending on the bus stop action signal (16),
**characterized in that**
starting the braking action (24) of the vehicle (12) depends on a vehicle stop action signal (26) which is generated depending on the bus stop action signal (16) and at least one vehicle driving condition (30).

2. Method for operating (10) according to claim 1, **characterized in that** the braking action (24) is started if the vehicle stop action signal (26) is generated.

3. Method for operating (10) according to claim 1 or 2, **characterized in that** the vehicle stop action signal (26) is not generated as long as the vehicle (12) is stopped.

4. Method for operating (10) according to one of the preceding claims, **characterized in that** the vehicle stop action signal (26) is generated by a signal generation unit (28).

5. Method for operating (10) according to claim 4, **characterized in that** the signal generation unit (28) is mounted in the vehicle (12).

6. Method for operating (10) according to one of the preceding claims, **characterized in that** the vehicle driving condition (30) is a current distance (34) between the bus (14) and the vehicle (12) and the signal generation unit (28) generates the vehicle stop action signal (26) when the signal generation unit (28) determines that the current distance (34) is smaller than a predefined distance threshold (36).

7. Method for operating (10) according to one of the preceding claims, **characterized in that** the vehicle driving condition (30) is a current distance (34) between the bus (14) and the vehicle (12) and the signal generation unit (28) does not generate the vehicle stop action signal (26) when the signal generation unit (28) determines that the current distance (34) is equal to or larger than a predefined distance threshold (36).

8. Method for operating (10) according to one of the preceding claims, **characterized in that** dependent or independent of the vehicle stop action signal (26), a warning signal in the vehicle (12) which is directly visible by the driver is displayed if the bus stop action signal (16) is received by the vehicle (12).

9. Method for operating (10) according to one of the preceding claims, **characterized in that** the bus stop action signal (16) is sent out by the bus (14) and received by the vehicle (12) as long as the bus stop action is active.

10. Method for operating (10) according to one of the preceding claims, **characterized in that** the bus stop action signal (16) is generated when at least one bus passenger (32) in the bus (14) requests a bus (14) stop.
